(19) Europäisches Patentamt

European Patent Office

Office européen des brevets

(11) Publication number: 0 196 727 A1

## (12) EUROPEAN PATENT APPLICATION

(21) Application number: 86200545.1

(22) Date of filing: 02.04.86

(51) Int. Cl.4: **B32B 27/32** , C08L 23/04 , C09J 3/14 , B65D 33/00

(30) Priority: 03.04.85 NL 8500979
03.04.85 NL 8500980

(43) Date of publication of application:
08.10.86 Bulletin 86/41

(84) Designated Contracting States:
BE DE FR GB IT NL SE

(71) Applicant: STAMICARBON B.V.
Mijnweg 1
NL-6167 AC Geleen(NL)

(72) Inventor: Ruinaard, Hendrikus Pieter
Molenweg 29
NL-6133 XW Sittard(NL)
Inventor: Engels, Johannes Carolus Augustinus
Heistraat 2
NL-6136 BD Sittard(NL)

(74) Representative: van Golde, Lambertus Maria
Gerardus T. et al
OCTROOIBUREAU DSM P.O. Box 9
NL-6160 MA Geleen(NL)

(54) Multilayer bag provided with a peelable seal.

(57) A multilayer bag with a peelable seal is obtainable by first producing a laminated film of which at least one surface is a sealing layer comprising a blend of 65-95 wt.-% LLDPE with a density of 870-940 kg/m³ and 5-35 wt.-% polypropene and/or poly-isobutylene, then superimposing the laminated film such that the sealing layers contact each other and finally heat-sealing the edges of the laminated film at a temperature between 70 and 125 ¤C.

EP 0 196 727 A1

# MULTILAYER BAG PROVIDED WITH A PEELABLE SEAL

The invention relates to multilayer bags provided with peelable seals.

Bags produced from various materials, as well as bags consisting of a plurality of layers, are known in many applications. Particularly the packaging application has expanded enormously. The bottom of a bag is squeezed together at high temperatures (for instance 130 ¤C) and thus sealed. Generally it is desirable for this seal not to peel off or to become detached in the use of the bag. On the other hand, when the bag serves for the packaging of foodstuffs, it is often highly desirable for the seal to become detached fairly easily on at least one side of the bag when force is applied to it, in other words: the seal must be capable of being peeled off. In the process the sealing layer must not become detached from the film to which it has been applied, because such delamination results in fibre formation. This is a serious disadvantage in the packaging of foodstuffs.

So far it has been known how to use ionomers as peelable seals. These serve their purpose, but are rather expensive.

The object of the invention is to obtain a multilayer bag provided with a peelable seal which is easy of application and not expensive.

Surprisingly, this object was achieved by applying a blend of a copolymer of ethylene with one or more $C_3$-$C_{18}$ l-alkenes (LLDPE) and polypropylene (PP) and/or poly-1-butylene (PB) as sealing layer in weight percentages calculated on the total sealing layer of 65-95 for the LLDPE and 5-35 for the PP and/or PB, and using a sealing temperature between 70 and 125 ¤C.

This was not expected, because GB-A 2,029,762 teaches the use of such blends for non-peelable seals.

According to the present invention, preference is given to applying 75 to 95 % (wt) LLDPE and 5 to 25 % (wt) PP and/or PB, and specifically 80 to 90 % (wt) LLDPE and 10-20 % (wt) PP and/or PB calculated on the total sealing layer.

LLDPE is understood to mean copolymers of ethylene and one or more $C_3$-$C_{18}$ 1-alkenes. Particularly copolymers of ethylene and 1-octene serve their purpose in the use of peelable seals after mixture with PP and/or PB.

LLDPE with a density ranging from 870 kg/m³ upto 935 kg/m³ and a melt index ranging from 0,2 dg/min to 15 dg/min, preferably 0,8 to 10 dg/min serve their purpose satisfactorily in the use of peelable reals after blending with PP and/or PB. In particular for high speed packaging lines, where low sealing temperatures and short sealing lines are required, densities of 900-915 kg/m³ are preferred and offer better peeling characteristics than the existing systems.

The PP should be a homopolymer with a melt viscosity at the processing conditions that is close to the melt-viscosity of the LLDPE. The choice of meltviscosities, such that the PP homopolymer will disperse in the LLDPE melt, is preferred. A suitable MI range, measured at 230 ¤C and 2,16 kg, will be about 1.0 to about 15 dg/min, depending on the chosen meltindex of the LLDPE.

A peelable seal in the first place serves as a seal of for instance, a bag of salt-flavoured biscuits, roasted peanuts, corn flakes and other foodstuffs. In order to keep these in a fresh state the sealing layer must not peel off forthwith in the handling of the foodstuffs. That is why the seal must comply with minimum bonding requirements and must not peel off until a certain force is applied. A desired threshold value for the seal to peel off is 1 N.

On the other side, the seal should come released if some force is applied to it. This force must not be too great, of course, for otherwise the contents of the bag cannot be reached without the use of auxiliary devices, or the bag will be torn in an undesired manner, when opened.

That is why the threshold value of the force required to loosen the seal, or the peeling force, must not be greater than 12 N. Preferably the peeling force is between 2 and 9 N, particularly between 2.5 and 6 N.

The sealing together of layers of film generally takes place by means of heated bars between which the layers of film are squeezed on to each other at a bar temperature of about 125 to 150 ¤C. Such a temperature can be applied also in the sealing of the sealing layer according to the invention. Then however, the seal is not peelable anymore. So if for the bottom of the bag a non-peelable seal is desired, it is not necessary to make special provisions for that purpose, which is an advantage of the invention.

In the customary equipment (vertical form-, fill-and sealing machine) the bag is filled with the contents 1n question while the seal is still hot. Letting the seal cool would involve too long a waiting period and consequently result in inefficiency. That is why under the sudden weight, the hot seal must be sufficiently strong. The force required to peel off half of a seal having a width of 35 mm immediately after the sealing is called 'hot tack'. With a seal according to the invention having a width of 35 mm this is at least 150 g and mostly more than 175 g if a bar temperature of 125-150 ¤C, particularly 125-135 ¤C, is applied.

If the sealing temperature is lowered, there is a danger of obtaining a very poor seal; or none at all. The sealing layer according to the invention preferably allows 1tself to be sealed down to a good peelable seal at a temperature between 70 and 125 ¤C, particularly between 80 and 120 ¤C, and preferably below 110 ¤C.

When a high packaging speed is required, the sealing temperature to achieve the treshold value for the seal to be peelable, is desired to be low e.g. 80 ¤C. In that case the use of an 1-octene LLDPE with a low density, e.g. between 900 and 910 kg/m³ is preferred.

It is to be recommended that the sealing range of the sealing layer should be wide, e.g. between 10 ¤ and 20 ¤. Sealing range is understood here to mean the temperature range in which a good, peelable seal is formed. If this temperature range is too small, fluctuations in the temperature of the sealing equipment may have unacceptable consequences, such as an unpeelable seal, or a seal which becomes detached prematurely.

The sealing layer is preferably between 5 and 15 μ thick in order to provide favourable properties.

The laminated film from which the multilayer bag of the invention is prepared can be produced in a manner known per se such as, for instance, by means of cast or blown film extrusion. Adhesive layers may also be present.

The multilayer bags according to the invention may be made out of film with a sealing layer on one side, but it is also possible to produce the bag out of film provided with a sealing layer on both surfaces. The bags may be made out of one piece of film, which is folded and sealed, but also out of e.g. two pieces of film which are contacted and sealed.

Especially advantageous is the use of a multilayer film with limited water vapour transmission (less than 6 g/m². 24 hr, preferably less than 4.5 g/m². 24 hr) in view of the fact that peelable seal bags find a wide application in food packaging. Such a film may be prepared by blown film extrusion, but the use of cast film offers advantages such as high output and no special requirements as to the accomodation of the film line. It comprises by preference a layer of ethylenehomopolymer having a density above 940 kg/m³ (HDPE) and is obtainable by passing the polymers in melted condition via an extruder through a rectangular slit and subsequently cooling, optionally stretching and rolling them up, the temperature of the first cooling roll being at least 50 ¤C and at most 100 ¤C, preferably at least 60 ¤C. The use of a film consisting of a first layer of polypropylene, a second layer of HDPE and a third layer of a blend according to the invention, offers good results in the packaging of food. The use of HDPE with a density above 955 kg/m³ and a melt index between 1 and 12 dg/min. is recommended.

The invention will now be elucidated by means of examples without, however, being limited thereto.

Example 1

A coextrudate was produced with a first layer of 10 $\mu$ PP homopolymer, MI = 5.5. dg/min, a second layer of 22 $\mu$ HDPE, d = 963 kg/m³, MI = 8 dg/min, with, as a sealing layer, a blend of 85 % (wt) C$_8$-LLDPE, d = 915 kg/m³, MI = 4.4 dg/min and 15 % (wt) PP calculated on the total sealing layer was coextruded on a cast film line, the temperature of the first cooling roll being 20 ¤C. The thickness of the sealing layer was 8 $\mu$. A seal was made using an apparatus of the firm of Bruggen, type HSG/ETK, at a bar temperature of 110 ¤C, a sealing time of 1 sec. and a sealing pressure of 3 kg/cm².

The peeling force required to open the seal is measured in the same manner as in the opening of a bag, i.e. from the · middle of the seal, which was determined by folding the 10 cm long seal in the middle, fixing the two ends 1n the draw clamps of a tensile tester and peeling the seal off at a rate of 20 cm/min.

The water vapour transmission WVT) was measured by dividing a cell into two compartments by means of a piece of film. In one compartment the relative humidity of the atmosphere is 100 % at 38 ¤C; through the second compartment a non-preheated, dry nitrogen flow was passed. This flow takes up the water let through and delivers it again to an electrode covered with phosphorus pentoxide. Owing to the take-up of water the electric resistance of the electrode changes; this change, measured with a calibrated ammeter, shows the amount of water of the sample, and with it the WVT of the film.

The peeling force of the peelable seal, measured as described above, was 6 N; the water vapour transmission was 7,0 g/m² . 24 hr.

Comparative example 2

The same coextrudate as in Ex. 1 was sealed at a bar temperature of 130 ¤C. The force required for peeling the seal off was 15 N. In the process delamination occurred between the sealing layer and the PP layer.

Example 3

The same coextrudate as in Ex. 1 was sealed at a bar temperature of 90 ¤C. The peeling force was 1 N.

Example 4

The same coextrudate as in ex. 1 was produced with a temperature of the first cooling roll of 70 ¤C. The peeling properties of the sealing layer remained unchanged, but the water vapour transmission was 4.0 g/m² . 24 hr.

Example 5

A film of polypropylene homopolymer, MI = 5.5 dg/min with a sealing layer of 80 % (wt) C$_8$-LLDPE, d = 915 kg/m³, MI = 4.4 dg/min, and 20 % (wt) PP, MI = 5.5 dg/min, was coextruded as in example 1. The seal was 8 $\mu$ thick.

A seal was formed at a bar temperature of 110 ¤C. The peeling force was 2 N.

Comparative example 6

The same coextrudate as in Ex. 5 was sealed at a bar temperature of 130 ¤C. The peeling force was 16 N; in the process delamination occurred between sealing layer and PP layer.

Example 7

The same coextrudate as in Ex. 5 was sealed at a bar temperature of 95 ¤C. The peeling force was 1 N.

Comparative example 8

A PP film with a sealing layer of 100 % (wt) C$_8$-LLDPE, d = 915 kg/m³, MI = 4.4 dg/min, was coextruded and subsequently sealed at a bar temperature of 110 ¤C.

The peeling force was 14 N. In the process delamination occurred between the sealing layer and the PP layer.

Example 9

A film of polypropylene homopolymer, MI = 5.5 dg/min with a sealing layer of 80 % (wt) C$_8$-LLDPE, d = 906 kg/³, MI = 2.5 dg/min and 20 % (wt) PP, MI = 5,5 dg/min was coextruded as in example 1. A seal was made at a bar temperature of 85 ¤C. The peeling force was 2 N.

Example 10

The same coextrudate as in ex. 9 was sealed at a bar temperature of 95 ¤C. The peeling force was 6 N.

Comparative example 11

The same coextrudate as in ex. 9 was sealed at a bar temperature of 65 ¤C. No seal was formed.

Comparative example 12

The same coextrudate as in ex. 9 was sealed at a bar temperature of 125 ¤C. The peeling force was 15 N; delamination between sealing layer and PP layer occurred.

Example 13

A film of polypropylene homopolymer, MI = 5.5 dg/min with a sealing layer of 80 % (wt.) $C_8$-LLDPE, d = 902 kg/m³, MI = 2.3 dg/min, and 20 % (wt.) PP, MI = 5.5 dg/min was coextruded as in example 1. A seal was made at a bar temperature of 80 ¤C. The peeling force was 3 N.

**Claims**

1. A multilayer bag provided with a peelable seal, obtainable by first producing a laminated film of which at least one surface is a sealing layer comprising a blend of 65 to 95 wt.-% copolymer of ethylene and one or more 1-alkenes having 3-18 carbon atoms with a density between 870 and 940 kg/m³, and preferably between 900 and 935 kg/m³, and 5 to 35 wt.-% polypropylene and/or poly-1-butylene, then superimposing the laminated film such that the sealing layers contact each other and finally heat-sealing the edges of the laminated film at a temperature between 70 and 125 ¤C.

2. A multilayer bag according to claim 1, characterized in that the sealing layer comprises 75 to 95 wt.-%, preferably 80 to 90 wt.-% ethylene copolymer and 5 to 25 wt.-%, preferably 10 to 20 wt.-% polypropylene and/or poly-1-butylene.

3. A multilayer bag according to any one of claims 1-2, characterized in that the ethylene copolymer is a copolymer of ethylene and 1-octene.

4. A multilayer bag according to any one of claims 1-3, characterzied in that the ethylene copolymer has a density of 870 to 915 kg/m³, preferably of 900-915 kg/m³.

5. A multilayer bag according to any one of claims 1-4, characterized in that the ethylene copolymer has a melt index between 0,2 and 15 dg/min, preferably between 0,8 and 10 dg/min.

6. A multilayer bag according to any one of claims 1-5, characterized in that the sealing temperature is between 80 and 120 ¤C, preferably between 80 and 110 ¤C.

7. A multilayer bag according to any one of claims 1-6, characterized in that the sealing range is between 10 and 20 ¤.

8. A multilayer bag according to any one of claims 1-7, characterized in that the sealing layer is between 5 and 15 μm thick.

9. A multilayer bag according to any one of claims 1-8, characterized in that the laminated film also comprises a layer of ethylene homopolymer having a density above 940 kg/m³ and is obtainable by passing the polymers in melted condition via an extruder through a rectangular slit and subsequently cooling, optionally stretching, and rolling them up, the temperature of the first cooling roll being at least 50 ¤C and at most 110 ¤C, preferably at least 60 ¤C.

10. A multilayer bag according to claim 9, characterized in that the laminated film consists of a first layer of propylene homopolymer, a second layer of ethylene homopolymer and a third layer being the sealing layer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 095 299 (INTERCONTINENTAL PLASTIC INC.) * Claims 1-6,11,14-17,19-23; page 2, paragraph 1 - page 6, paragraph 1; page 10, paragraph 2 - page 11, paragraph 1 * | 1-4,9, 10 | B 32 B 27/32 C 08 L 23/04 C 09 J 3/14 B 65 D 33/00 |
| A,D | GB-A-2 029 762 (MITSU PETROCHEMICAL) * Claims 1-3; page 2, line 33 - page 4, line 49; page 5, lines 1-7 * | 1-6,8, 10 | |
| A | FR-A-2 391 835 (IBM FRANCE) * Claims 1,5,6,8,10; page 10, lines 1-24 * | 9 | |
| A | GB-A-1 370 355 (LEESONA CO.) * Page 3, lines 100-102 * & NL - A - 71 12 109 | 10 | TECHNICAL FIELDS SEARCHED (Int. Cl.4) B 32 B C 08 L B 65 D B 29 C |

The present search report has been drawn up for all claims

| Place of search | Date of completion of the search | Examiner |
|---|---|---|
| THE HAGUE | 18-06-1986 | BLASBAND I. |